# EUROPEAN PATENT APPLICATION

(11) **EP 1 798 494 A1**
(43) Date of publication of application: **20.06.2007**
(21) Application number: 06025937.1
(22) Date of filing: 14.12.2006
(51) Int. Cl.: F24F 11/00, G05D 23/19

(54) **Control apparatus for an air conditioner**

(30) Priority: 14.12.2005 GB 0526429
(71) Applicant: BASIC HOLDINGS, Dublin 4 (IE)
(72) Inventor: Cowling, Paul, Castlebellingham Co Louth (IE); Kiernan, Patrick, Navan Co. Meath (IE); Mullaney, Conor, Skerries Co. Dublin (IE); McCabe, Stephen, Dunleer Co. Louth (IE)
(74) Representative: Sanderson, Nigel Paul

(57) **Abstract**

The invention relates to a fan heater system in particular for industrial and commercial environments. There is provided a system (100) suitable for controlling a temperature of a room, the system comprising: at least one apparatus (10) for providing a flow of temperature-adjusted air, means for determining an actual thermal condition of an environment (120); a system controller (110), the system controller (110) having: means for determining a required thermal condition of said environment; means for determining a required operational state of the at least one apparatus based on said actual thermal condition of said environment and said required thermal condition of said environment; and means for communicating said required operational state to the, a respective one of, or a plurality of, said at least one apparatus (10).

## Description

This invention relates to a system and apparatus for providing a flow of temperature adjusted air. In particular, the invention relates to a system for heating air in commercial and industrial environments such as factories and warehouses, and in public buildings such as stadiums, sports centres and retail spaces.

It is known to heat an area of a building using a fan heater, and a variety of fan heaters for this purpose have been developed. Fan heaters according to the prior art typically employ an axial fan mounted upstream of a heat source, which may be electrically powered or gas fired. Such fans suffer the disadvantage that they supply air with poor directional characteristics. More especially, axial fans are unable to generate a satisfactory pressure when working against a restriction downstream of the fan, such as in the outlet duct. This necessitates a larger than desirable size for the outlet duct, and consequently a larger size than would otherwise be desirable for a heating element when contained within the outlet duct. Thus, the resulting fan heater products generally have cumbersome shapes. The outer walls of such products may also become hot to the touch presenting a hazard to persons and objects nearby. In many cases there is therefore a need to mount the heaters at a high level away from the floor of a building. This results in reduced efficiency of heating and a lack of flexibility in the choice of installation locations.

A further problem exists that installation of a system having a plurality of fan heaters typically requires installation of substantial amounts of cabling and associated trunking in order to connect each of the heaters to a controller. This is both an expensive and a time consuming task. The complexity of wiring renders systems vulnerable to faults and consequent failure. Such systems may also be unsightly due to the amount of cabling. Furthermore, health and safety issues arise due to the requirement to route the cabling between heater and controller in a safe manner.

According to a first aspect of the invention there is provided a system suitable for controlling a temperature of a room, the system comprising:
at least one apparatus for providing a flow of temperature-adjusted air;
means for determining an actual thermal condition of an environment;
a system controller, the system controller having:
   means for determining a required thermal condition of said environment;
   means for determining a required operational state of the at least one apparatus based on said actual thermal condition of said environment and said required thermal condition of said environment; and
   means for communicating said required operational state to the, a respective one
   of, or a plurality of, said at least one apparatus.

Preferably the system includes more than one apparatus.

Preferably the means for communicating said required operational state comprises at least one cable. Alternatively or in addition, the means for communicating said required operational state may comprise a wireless communications link.

Preferably each apparatus is connected to a neighbouring apparatus in a daisy-chain configuration. This feature has the advantage that a reduced amount of wiring is required relative to systems where each heater is directly connected to a controller.

Preferably the cable is arranged to be releasably connectable to the apparatus. This has the advantage that the system may be easily and conveniently installed at a given location.

Preferably the cable is arranged to be releasably connectable to the apparatus by means of a quick-release connector. For example, RJ45 cabling may be used, together with RJ45-compatible connectors.

Preferably the system comprises actuation means configured to actuate the apparatus thereby to deliver the flow of temperature controlled air.

Preferably the actuation means is configured to actuate the apparatus thereby to deliver the flow of temperature controlled air when the actuation means is in a first condition.

Preferably the actuation means comprises an occupancy detector, the occupancy detector being configured to detect the presence of an occupant of a room.

Preferably the occupancy detector comprises a motion sensor.

Preferably the occupancy detector comprises a thermal sensor such as a passive infra-red device.

Preferably the system is configured to actuate the apparatus to obtain a flow of temperature controlled air for a predetermined period of time, said period being measured from the most recent time at which the presence of an occupant was detected.

In some embodiments of the invention, once an occupant has been detected, the system begins to count the amount of time elapsed since detection of the occupant. If an occupant is again detected, before the predetermined period of time has elapsed, the system resets the amount of elapsed time to zero and beings to count the amount of elapsed time again.

Preferably the system is configured to begin a shutdown sequence at the end of said predetermined period of time from the most recent time at which the presence of an occupant was detected.

Preferably the actuation means comprises a switch.

Preferably the system is configured to actuate the apparatus when the switch is in a first condition.

Preferably the switch is configured to assume the first condition when a door is in an open condition.

Preferably the first condition corresponds to a closed condition of the switch.

Preferably the switch is configured to assume a second condition different from the first condition when the door is in a closed condition.

Preferably the system is configured to execute a shutdown sequence when the switch is moved from the first condition to the second condition.

The system may be configured such that the shutdown sequence comprises the steps of turning off the apparatus.

Preferably the system is configured such that the shutdown sequence comprises the steps of maintaining the apparatus in an on condition for a predetermined period of time before turning off the apparatus.

Preferably the second condition corresponds to an open condition of the switch.

The means for determining an actual thermal condition of a room may be a thermostat.

The means for determining a required thermal condition of a room may include a user-programmable control module.

Preferably the apparatus for providing a flow of temperature adjusted air comprises:
a housing defined by external walls and including at least one housing inlet aperture;
a centrifugal blower disposed within the housing and having an air inlet and an air outlet;
a conduit, disposed within the housing and defined by at least one conduit wall, the conduit having an inlet end in fluid communication with the air outlet of the centrifugal blower, and an outlet end in communication with the exterior of the apparatus and the conduit being so disposed that an air space is defined between the external face of the or each wall of the conduit and respective opposing walls of the housing; and
means, disposed within the conduit, for changing the temperature of air passing through the conduit;
wherein the centrifugal blower is operative to draw air from within the housing and to expel air into the conduit through said conduit inlet end, whereby ambient air is operatively drawn into the apparatus through said at least one inlet aperture
- and air of changed temperature is expelled from the apparatus through the conduit outlet aperture.

The construction of the apparatus according to the invention is advantageous in cooling the apparatus, and in particular in ensuring the external walls of the housing, and components such as control means (see below), are not overheated.

Centrifugal blowers have omni-directional inlet characteristics and are thereby less susceptible than other types of blower (such as axial blowers) to significant performance reduction in the event that obstacles or obstruction are positioned upstream or downstream of the blower (i.e. proximate to the air inlet or outlet of the fan),
Use of a centrifugal fan in the apparatus of the invention enables a tighter element pack (that is, a heating (or, respectively, cooling) element of smaller physical size) to be fitted in the outlet while maintaining satisfactory air through-flow characteristics. In contrast, larger elements and therefore a larger product would be necessary if an axial fan were used.

In a preferred embodiment said air space is sufficient to allow a flow of air around the exterior of said conduit.

The omni-directional inlet characteristics of the centrifugal fan result in a general circulation of air within the housing which assists in cooling the walls of the housing and the conduit. Thus, the likelihood of portions of the wall of the housing experiencing severe temperature excursions is reduced. In particular, the use of a centrifugal fan best serves the requirement to promote or provide separate the hot and cool zones within the housing of the fan heater. In contrast, an axial fan is less able (if at all) to provide such thermally differentiated regions (particularly following a shut-down condition). For example, in the case of an axial fan, hot air from a relatively hot-region can easily migrate through the open spaces between the fan blades.

Preferably control means operative to control the centrifugal blower and/or the temperature changing means are disposed within the housing. Preferably the control means is mounted proximate the air inlet aperture of the blower, which further assists in ensuring that the control means is maintained at a suitable low temperature, i.e. is not overheated, by providing a flow of air over the control means.

In preferred embodiments the means for changing the temperature of the air comprises air heating means. Most preferably the air heating means comprises an electric heating element. The air heating means may alternatively be a heat exchanger through which a supply of hot water is passed.
Alternatively, the means for changing the temperature of the air may comprise air cooling means.

The means for changing the temperature of the air may include both air heating means and air cooling means.

In a particularly preferred embodiment the means for heating the air further comprises at least one group of three heating elements, adapted to be powered by a single or three-phase power supply. In the latter case each element being adapted to be connected to a different phase of the power supply. Preferably a plurality of such groups, in particular two or three groups is provided. The control means is adapted to control the elements such that in an "on" condition of a group, all elements of a group are connected to the power supply, and in an "off" condition of a group all elements of a group are disconnected from the power supply. This has the advantage that phase imbalance can be minimized, since each phase of the power supply is connected to the same number of heating elements as the other phases.

In a second aspect of the invention there is provided apparatus for providing a flow of temperature adjusted air comprising:
a housing defined by external walls and including at least one housing inlet aperture;
a centrifugal blower disposed within the housing and having an air inlet and an air outlet;
a conduit, disposed within the housing and defined by at least one conduit wall, the conduit having an inlet end in fluid communication with the air outlet of the centrifugal blower, and an outlet end in communication with the exterior of the apparatus and the conduit being so disposed that an air space is defined between the external face of the or each wall of the conduit and respective opposing walls of the housing; and
means, disposed within the conduit, for changing the temperature of air passing through the conduit;
wherein the centrifugal blower is operative to draw air from within the housing and to expel air into the conduit through said conduit inlet end, whereby ambient air is operatively drawn into the apparatus through said at least one inlet aperture and air of changed temperature is expelled from the apparatus through the conduit outlet aperture.

For a better understanding of the present invention, and to show how it may be carried into effect, reference will now be made by way of example only to the accompanying drawings, in which:
FIGURE 1 is a perspective view of an apparatus according to a first embodiment of the present invention;
FIGURE 2 is a schematic cross-sectional view along line X-X of the conduit of an apparatus according to the preferred embodiment;
FIGURE 3 is a schematic diagram of the first embodiment of the invention;
FIGURE 4 is a schematic diagram of a wiring arrangement of the first embodiment of the invention; and
FIGURE 5 is a table of the logical states of control signals of the system and corresponding states of the apparatus.

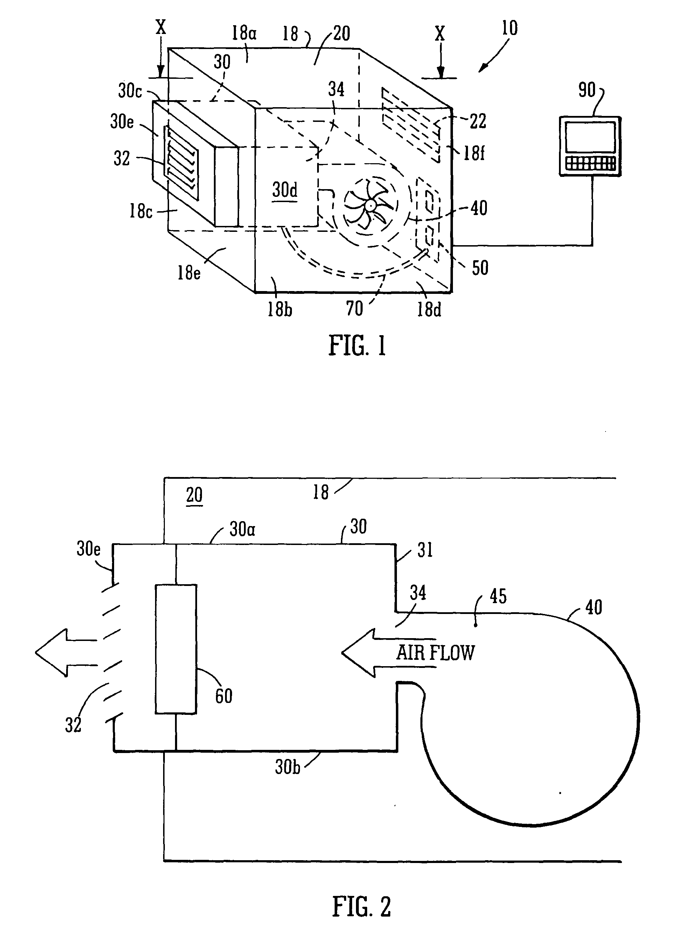

Referring now to the drawings, the apparatus 10 comprises a housing 18 defining an internal space 20 (hereinafter a first chamber 20), a conduit or second chamber 30, a centrifugal blower 40 and a control means or controller 50. The shape of the first chamber 20 preferably is, or approximates to, a rectangular parallelepiped, although other shapes are not precluded. In the illustrated embodiment, first chamber 20 is defined by respective top and bottom walls 18a, 18b, side walls 18c, 18d, front wall 18e and rear wall 18f, and is provided with at least one inlet orifice 22. The conduit 30 may be of any convenient shape but preferably also is, or approximates to, a rectangular parallelepiped having open opposed faces. In the illustrated embodiment the conduit 30 comprises top and bottom walls 30a, 30b, side walls 30c, 30d, partial front wall 30e and partial rear wall 31. Depending on the particular construction of the apparatus, front wall 30e may be absent. Likewise, depending on the relative sizes and shapes of the conduit 30 and blower 40, rear wall 31 may be absent. The conduit 30 is provided with an outlet orifice 32 and an inlet orifice 34. The respective orifices 22, 32 may preferably include a grille or mesh to prevent accidental or unauthorised access to the interior of the apparatus. The blower 40 communicates with the conduit 30 through the conduit inlet orifice 34 which is preferably opposite the conduit outlet orifice 32. The air output from the blower 40 passes exclusively into the conduit 30, through the orifice 34. An array of heating elements 60 (Figure 2) is located in the conduit 30 proximate the outlet orifice 32. The elements 60 are connected to a controller 50 by a power supply cable 70.

The first chamber 20 is preferably substantially airtight except for the inlet orifice(s) 22. One or more inlet orifices 22 may be provided in front wall 18e, but if so care must be taken in the construction of the apparatus to ensure that significant amounts of heated air exiting the outlet orifice 32 are not drawn into the housing 18, which would cause overheating of the air and of components of and within the housing. The conduit 30 is also substantially airtight, except for the connection to the blower 40 at inlet orifice 34 and the outlet orifice 32.

An important feature of the apparatus 10 is that the walls (30a - d) of the conduit are spaced apart from the respective opposed walls (18a - 18d) of the housing 18, so that an air gap is defined therebetween. In other words, other than at front wall 18e the conduit 30 is spaced apart from the housing 18. Of course, suitable support components or fixings (not shown) for the conduit may, if necessary, span the gap between the respective housing and conduit walls. This construction provides for the circulation of air within the first chamber 20 and ensures that the external walls (i.e. the walls of the housing 18) remain cool and that internal electrical and electronic components are not overheated.

In an alternate embodiment of the invention, the heating element 60 may be replaced by a cooling element.

According to the first embodiment, the array of heating elements 60 comprises 2 banks of 3 elements, each bank being star or delta (230V 3 phase) connected to a three-phase power supply provided by the controller 50.

The controller 50 is mounted within the first chamber proximate the air inlet of the blower 40. This maximises the air flow over the controller 50, thereby cooling the controller 50. The controller 50 has 8 control lines that are connectable to a control panel 90 and to other like apparatus 10 by a network cable in a daisy-chain configuration.

In one preferred arrangement there are two speed settings for the blower 40, a high speed setting and a low speed setting. There are also two heat settings: a high heat setting, where both banks of heating elements 60 are powered, and a low heat setting,
where only one bank of heating elements 60 is powered, in addition to an off mode
where both banks of heating elements 60 are switched off.

The speed and heat settings may be controlled by the control panel 90. In a low heat mode of the apparatus 10, the blower 40 may be set to a high speed setting or a low speed setting, and only one bank of heating elements 60 is powered. In a high heat mode of the apparatus 10, typically the blower 40 may only be set to a high speed mode, and both banks of heating elements 60 are powered.

In a preferred configuration, when the apparatus 10 is switched off, the blower 40 continues to blow for a period of time, typically about 30s before powering down, in order to prevent damage to the apparatus 10 due to overheating of the heating elements 60. Similarly, when the apparatus 10 is initially powered up, the blower 40 switches on for a period of about 30s with the heating elements switched off before the heating elements 60 may be switched on. This is in order to reduce damage to the heating elements 60 in the event of an interruption to the power supply when the apparatus 10 is in operation with the heating elements 60 switched on.

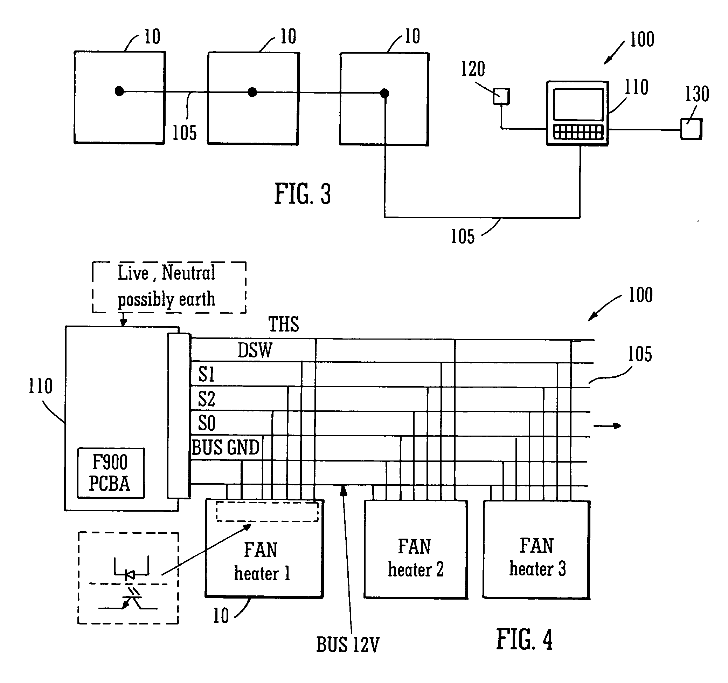

According to the first embodiment, a plurality of apparatus as described above are connected to form a heating system 100 (figure 3). The apparatus 10 are connected by a network cable 105 in a daisy-chain manner. The system controller 110 is connected to a room temperature sensor 120. Additionally, the system controller may co-operate with a sensor 130 such as a PIR movement sensor which acts to detect the presence of a person in the environment being heated. Thus, when the presence of a person is detected, the controller 110 switches the heating apparatus 10 on. If no person is detected for a period of 20 minutes, the system controller 110 causes the apparatus to either switch off directly, or, to be switched to a phased shutdown sequence. In some embodiments of the invention this period may be adjusted, for example by means of a control panel.

In the phased shut down sequence, the apparatus 10 may continue to operate at a half heat or other lower setting for a defined period such as a further 10 minutes before shutting down. In some embodiments of the invention the length of the defined period may be varied, for example by means of a control panel. In this way, the room is maintained in a relatively warm state so that if a person re-enters the room shortly after leaving, re-heating of the room to the normal desired temperature is achieved more rapidly.

The system controller 110 is provided with a programmable timer, allowing the user to select a temperature profile of the environment to be heated. The system controller 110 controls each respective apparatus 10 to maintain this temperature profile, with reference to the temperature sensor 120. In some embodiments of the invention the programmable timer is a programmable seven day timer.

The network cable 105 has three signal lines S0, S1 and S2 for indicating the heat and fan speed settings of the apparatus, a PIR signal line for indicating whether the room is occupied , and a thermal signal line for providing a signal dependent upon the condition of the temperature sensor 120. In alternative embodiments of the invention the network cable 105 may have more or fewer signal lines.

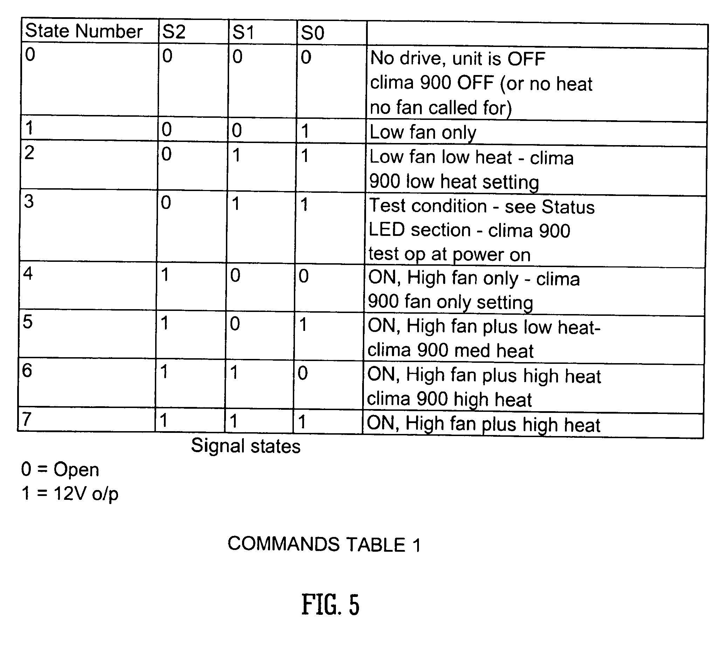

Figure 4 shows a system according to the first embodiment having three units of apparatus 10 connected to a system controller 110. As can be seen from figure 4, the each apparatus 10 is connected to each of seven signal lines. The status of each apparatus is determined by reference to signal lines S0, S1, and S2 according to the table shown in figure 5. As can be seen from the table, when each of the signal lines is set to a logical 'zero' signal, each of the heaters is set to an off condition. When S0 is set to logical 'one' and S1, S2 are set to logical zero, each apparatus enters a 'low fan only' mode. That is, the fan is switched to a low speed, with no heating or cooling.

When S0 and S2 are at logical zero and S1 is at logical one, each apparatus enter a low fan low heat' mode. Similarly, when S2 is logical one and S0, S1 are logical zero, the apparatus enters a 'high fan only' mode; that is, the fan is switched to a high speed, with no heating or cooling.

Similarly, other combinations of logical signals on the signal lines S0, S1, S2 result in the apparatus entering a high fan speed medium heat mode, or a high fan speed high heat mode.

It will be appreciated by the skilled person that alternative embodiments may be contemplated in which a larger or smaller number of signal lines is employed, in order to enhance the flexibility or simplicity of the system, respectively. For example, a cooling mode could be triggered by means of an appropriate combination of signals on respective signal lines.

A microcontroller in the system controller 110 monitors input signal lines from movement sensor 130 and room temperature sensor 120. The controller 110 sets the logical values of the signal lines in response to the signals received from the sensors 130 and 120.

According to the first embodiment of the invention, the movement sensor 130 and temperature sensor 120 are also connected to the system controller 120 via network cable. The sensors 120, 130 may be connected in a daisy-chain manner, or directly to the controller 130. The fact that the sensors are connected using the same network cable 105 enables a reduction in the amount of cabling required for the installation. This is because in some embodiments of the invention the sensors 120, 130 may be connected to one of the apparatuses 10, which is in turn connected (directly or indirectly) to the system controller.

In some embodiments of the invention, the heaters are individually responsive to one or more signals from sensors such as movement sensors and temperature sensors. In some embodiments of the invention, movement sensors and/or temperature sensors are integrated with the apparatus 10. This feature further reduces the amount of cabling required.

In some embodiments of the invention, each apparatus has a controller cable of processing signals from a temperature sensor and/or movement sensor, and responding appropriately in setting the fan speed and heating or cooling level of the apparatus 10.

In some embodiments of the invention, the system controller 110 is integrated into one or more of the apparatus 10, for example into controller 50 of an apparatus 10.

Apparatus 10 according to the present invention provides an enhanced flow of substantially unidirectional, temperature adjusted air. The walls of the housing defining the first chamber 20 are maintained at a temperature close to ambient temperature. This enables apparatus 10 according to the invention to be mounted at a lower level in an environment to be heated, since accidental contact of an object including a person with the housing is less likely to result in damage to the object.

The ability to connect a plurality of apparatus 10 according to the invention using network cables, and to control them via a single controller is highly advantageous. The amount of wiring required is substantially reduced compared with connecting each apparatus 10 to a controller 110. The system is also rendered less complex, and less prone to failure. The appearance of the system is also enhanced since the amount of cabling is reduced. Furthermore, since only a network cable is required to connect a heater to the controller, the heater may be connected to a local power supply in order to power the heater. Thus, heavy duty power cable does not need to be laid between the heater and the controller.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

## Claims

1. A system suitable for controlling a temperature of a room, the system comprising:
at least one apparatus for providing a flow of temperature-adjusted air;
means for determining an actual thermal condition of an environment;
a system controller, the system controller having:
means for determining a required thermal condition of said environment;
means for determining a required operational state of the at least one apparatus based on said actual thermal condition of said environment and said required thermal condition of said environment; and
means for communicating said required operational state to the, a respective one of, or a plurality of, said at least one apparatus.

2. The system of claim 1 wherein the system includes more than one apparatus.

3. The system of claim 1 or claim 2 wherein the means for communicating said required operational state is at least one cable.

4. The system of claim 3 wherein each apparatus is connected to a neighbouring apparatus in a daisy-chain configuration.

5. The system of claim 3 or claim 4 wherein the cable is arranged to be releasably connectable to the apparatus.

6. The system of claim 5 wherein the cable is arranged to be releasably connectable to the apparatus by means of a quick-release connector.

7. The system of any preceding claim comprising actuation means configured to actuate the apparatus thereby to deliver the flow of temperature controlled air.

8. The system of claim 7 wherein the actuation means is configured to actuate the apparatus thereby to deliver the flow of temperature controlled air when the actuation means is in a first condition.

9. The system of claim 8 wherein the actuation means comprises an occupancy detector, the occupancy detector being configured to detect the presence of an occupant of a room.

10. The system of claim 9 wherein the occupancy detector comprises a motion sensor.

11. The system of claim 9 or claim 10 wherein the occupancy detector comprises a thermal sensor such as a passive infra-red device.

12. The system of any one of claims 9 to 11 wherein the system is configured to actuate the apparatus to obtain a flow of temperature controlled air for a predetermined period of time, said period being measured from the most recent time at which the presence of an occupant was detected.

13. The system of claim 12 wherein the system is configured to begin a shutdown sequence at the end of said predetermined period of time from the most recent time at which the presence of an occupant was detected.

14. The system of claim 9 wherein the actuation means comprises a switch.

15. The system of claim 14 wherein the system is configured to actuate the apparatus when the switch is in a first condition.

16. The system of claim 15 wherein the switch is configured to assume the first condition when a door is in an open condition.

17. The system of claim 15 or 16 wherein the first condition corresponds to a closed condition of the switch.

18. The system of any one of claims 14 to 17 wherein the switch is configured to assume a second condition different from the first condition when the door is in a closed condition.

19. The system of claim 18 wherein the system is configured to execute a shutdown sequence when the switch is moved from the first condition to the second condition.

20. The system of claim 18 wherein the system is configured such that the shutdown sequence comprises the steps of turning off the apparatus.

21. The system of clam 20 wherein the system is configured such that the shutdown sequence comprises the steps of maintaining the apparatus in an on condition for a predetermined period of time before turning off the apparatus.

22. The system of clam 21 wherein the system is configured such that the shutdown sequence comprises the steps of maintaining the apparatus in an on condition for a predetermined period of time before turning off the apparatus.

23. The system of claim 18 wherein the second condition corresponds to an open condition of the switch.

24. The system of any preceding claim wherein the means for determining an actual thermal condition of a room is a thermostat.

25. The system of any preceding claim wherein the means for determining a required thermal condition of a room includes a user-programmable control module.

26. The system of any preceding claim wherein the apparatus for providing a flow of temperature adjusted air comprises:
a housing defined by external walls and including at least one housing inlet aperture;
a centrifugal blower disposed within the housing and having an air inlet and an air outlet;
a conduit, disposed within the housing and defined by at least one conduit wall, the conduit having an inlet end in fluid communication with the air outlet of the centrifugal blower, and an outlet end in communication with the exterior of the apparatus and the conduit being so disposed that an air space is defined between the external face of the or each wall of the conduit and respective opposing walls of the housing; and
means, disposed within the conduit, for changing the temperature of air passing through the conduit;
wherein the centrifugal blower is operative to draw air from within the housing and to expel air into the conduit through said conduit inlet end, whereby ambient air is operatively drawn into the apparatus through said at,least one inlet aperture and air of changed temperature is expelled from the apparatus through the conduit outlet aperture.

27. The system of claim 26 wherein said air space is sufficient to allow a flow of air around the exterior of said conduit.

28. The system of claim 26 or 27 wherein control means operative to control the centrifugal blower and/or the temperature changing means are disposed within the housing.

29. The system of claim 28 wherein the control means is mounted proximate an air inlet aperture of the blower.

30. The system of any one of claims 26 to 29 wherein the means for changing the temperature of the air comprises air heating means.

31. The system of claim 30 wherein the means for heating the air comprises an electric heating element.

32. The system of any one of claims 26 to 29 wherein the means for changing the temperature of the air comprises air cooling means.

33. The system of claim 32 wherein the means for changing the temperature of the air includes air heating means and air cooling means.

34. The system as claimed in claim 31 or 33 wherein the means for heating the air further comprises at least one group of three heating elements, adapted to be powered by a three-phase power supply, each element being adapted to be connected to a different phase of the power supply, the control means being adapted to control the elements such that in an on condition of a group, all elements of a group are connected to the power supply, and in an off condition of a group all elements of a group are disconnected from the power supply.
